# EUROPEAN PATENT APPLICATION

(11) **EP 4 213 293 A2**
(43) Date of publication of application: **19.07.2023**
(21) Application number: 22213162.5
(22) Date of filing: 13.12.2022
(51) Int. Cl.: H01M 50/507, H01M 50/583, H01M 50/289, H01M 50/342

(54) **BATTERY PACK**

(30) Priority: 14.01.2022 KR 20220005923
(71) Applicant: SK On Co., Ltd., Seoul 03161 (KR)
(72) Inventor: RHEE, Seo Roh, 34124 Daejeon (KR); KANG, Ji Eun, 34124 Daejeon (KR); PARK, Da Som, 34124 Daejeon (KR); HAN, Jeong Woo, 34124 Daejeon (KR)
(74) Representative: Prüfer & Partner mbB Patentanwälte · Rechtsanwälte

(57) **Abstract**

A battery pack includes a pack case accommodating a first battery module and a second battery module, and a busbar including a first body portion fastened to the first battery module, a second body portion fastened to the second battery module, and at least one breakable portion disposed between the first body portion and the second body portion and fused at a temperature lower than those of the first body portion and the second body portion. The busbar includes an insulating cover covering the first and second body portions and the breakable portion, and a flameproof cover covering the insulating cover. At least a portion of the insulating cover covering the breakable portion is exposed to the outside of the flameproof cover.

## Description

### BACKGROUND

### 1. FIELD

The present disclosure relates to a battery pack comprising a plurality of battery modules.

### 2. DESCRIPTION OF RELATED ART

As technological development and demand for mobile devices, electric vehicles, and energy storage systems (ESS) increases, demand for secondary batteries as an energy source has been rapidly increasing also.

Unlike primary batteries, secondary batteries are chargeable and dischargeable, and thus are applicable to devices within various fields such as digital cameras, mobile phones, notebook computers, hybrid vehicles, and electric vehicles. Among secondary batteries, a large amount of research has been conducted on lithium secondary batteries having high energy density and discharge voltage. Lithium secondary batteries have been manufactured as pouch-type battery cells having flexibility, prismatic battery cells having rigidity, or cylindrical can-type battery cells.

A plurality of battery cells stacked and electrically connected to each other are mounted in a pack case in units of cell stacks to form a battery pack. Such a battery pack is installed and used in an electric vehicle or the like.

However, in a battery pack according to the related art, when thermal runaway occurs in a battery module, members maintaining insulation between a busbar and other members may be damaged, resulting in a short circuit between the busbar and the other members (for example, a pack case, and the like), which may cause a secondary explosion or thermal runaway, and may lead to a risk of damage to the entire battery module.

Referring to Korean Patent Application Publication No. 10-2020-0067587, a flame propagation preventing member is provided to protect a busbar during thermal runaway. However, a structure disclosed in the above document does not consider a feature of cutting off electrical connection between the battery modules during thermal runaway. Accordingly, even during thermal runaway, the electrical connection between the battery modules is maintained, such that there is a high probability that an additional explosion or ignition may occur.

Related Art 1: Korean Patent Application Publication No. 10-2020-0067587

### SUMMARY

An aspect of the present disclosure provides a battery pack capable of quickly cutting off electrical connection between battery modules in an event situation such as thermal runaway.

According to an aspect of the present disclosure, there is provided a battery pack including a pack case accommodating a first battery module and a second battery module, and a busbar including a first body portion fastened to the first battery module, a second body portion fastened to the second battery module, and at least one breakable portion disposed between the first body portion and the second body portion and fused at a temperature lower than those of the first body portion and the second body portion. The busbar may include an insulating cover covering the first and second body portions and the breakable portion, and a flameproof cover covering the insulating cover. At least a portion of the insulating cover covering the breakable portion may be exposed to the outside of the flameproof cover.

The flameproof cover may be formed of a sheet including mica.

The insulating cover may be formed of a material melting at a temperature of 200°C or lower.

The flameproof cover may be formed of a material melting at a temperature of 1000°C or higher.

A portion of the insulating cover exposed to the outside of the flameproof cover may be disposed to oppose one of the first battery module and the second battery module.

At least one of the first battery module and the second battery module may include a vent portion discharging gas generated therein to the outside. The busbar may be disposed such that at least a portion of the breakable portion opposes the vent portion.

The first body portion and the second body portion may be formed of a copper material. The breakable portion may be formed of an aluminum material.

The pack case may include a reinforcing frame disposed between the first battery module and the second battery module. An inner space of the reinforcing frame may be used as a gas flow path through which high-temperature gas moves.

The reinforcing frame may include a vent portion through which the gas moving through the gas flow path is discharged to the outside of the reinforcing frame. The busbar may be disposed such that at least a portion of the breakable portion opposes the vent portion.

The vent portion may be disposed on an upper surface of the reinforcing frame. The busbar may be disposed to cross an upper portion of the reinforcing frame.

According to another aspect of the present disclosure, there is provided a battery pack including a pack case accommodating a first battery module and a second battery module, the pack case including a reinforcing frame disposed between the first battery module and the second battery module, and a busbar crossing an upper portion of the reinforcing frame and interconnecting the first battery module and the second battery module. An inner space of the reinforcing frame may be used as a gas flow path through which high-temperature gas moves. The reinforcing frame may include a vent portion through which the high-temperature gas is discharged to the outside of the reinforcing frame. At least a portion of the busbar may be disposed to oppose the vent portion.

The busbar may include a first body portion fastened to the first battery module, a second body portion fastened to the second battery module, and at least one breakable portion disposed between the first body portion and the second body portion and fused at a temperature lower than those of the first body portion and the second body portion.

The busbar may be disposed such that at least a portion of the breakable portion opposes the vent portion.

The battery pack may further include a flameproof cover covering the busbar. At least a portion of the breakable portion may be exposed to the outside of the flameproof cover.

The busbar may further include an insulating cover disposed on the portion of the breakable portion exposed to the outside of the flameproof cover.

According to example embodiments of the present disclosure, when an event such as thermal runaway occurs in a specific battery module, gas discharged from a vent portion may quickly cut a busbar, such that electrical connection with another battery module may be quickly cut off, thereby ensuring stability and reliability of a battery pack during thermal runaway.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a simplified schematic perspective view illustrating a battery pack according to an example embodiment of the present disclosure;
FIG. 2 is a partially exploded perspective view of FIG. 1;
FIG. 3 is an enlarged perspective view of the busbar fastening structure illustrated in FIG. 1;
FIG. 4 is an exploded perspective view of FIG. 3;
FIG. 5 is an enlarged plan view of portion A of FIG. 2;
FIG. 6 is a cross-sectional view taken along line II-II' of FIG. 3;
FIG. 7 is a cross-sectional view taken along line I-I' of FIG. 1;
FIG. 8 is an enlarged view of portion C of FIG. 7; and
FIG. 9 is a simplified schematic view illustrating a cross-section of a busbar according to another example embodiment of the present disclosure.

### DETAILED DESCRIPTION

Hereinafter, example embodiments of the present disclosure will be described in detail with reference to the accompanying drawings. In this case, it should be noted that the same components in the accompanying drawings are denoted by the same reference numerals as much as possible. In addition, detailed descriptions of well-known functions and configurations that may obscure the gist of the present disclosure may be omitted. For the same reason, some components are exaggerated, omitted, or schematically illustrated in the accompanying drawings, and the size of each component does not fully reflect the actual size.

In the present specification, an upper side, an upper portion, a lower side, a lower portion, and the like are described with reference to the drawings, and may be described differently when the direction of a corresponding object is changed.

In addition, a battery device described below may include an EV (electric vehicle) system, an energy storage system, and the like including a battery module or battery pack including a plurality of battery cells. In the following example embodiments, the battery pack will be described as an example.

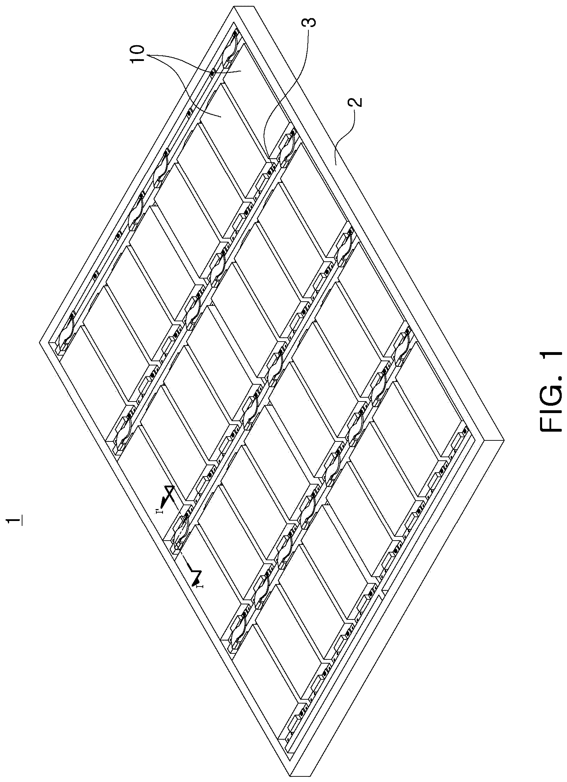

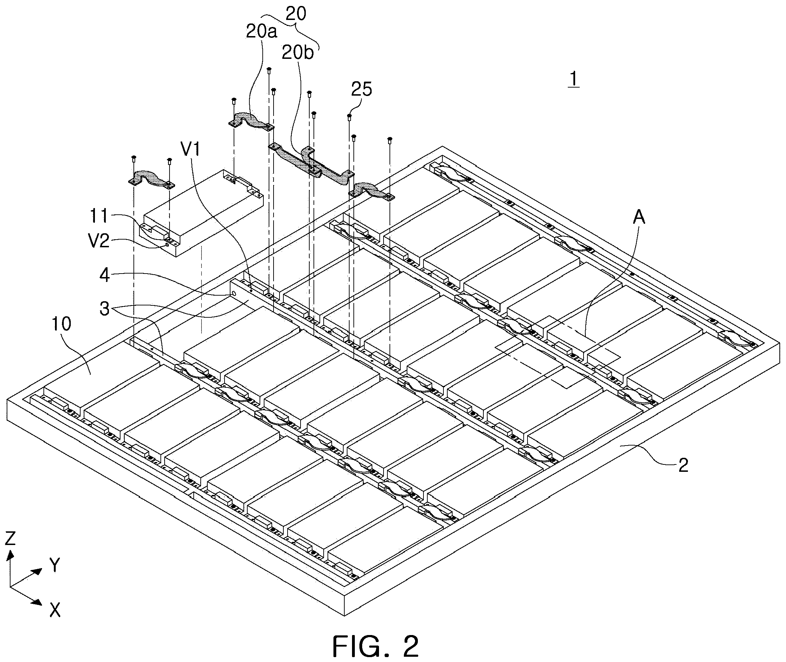

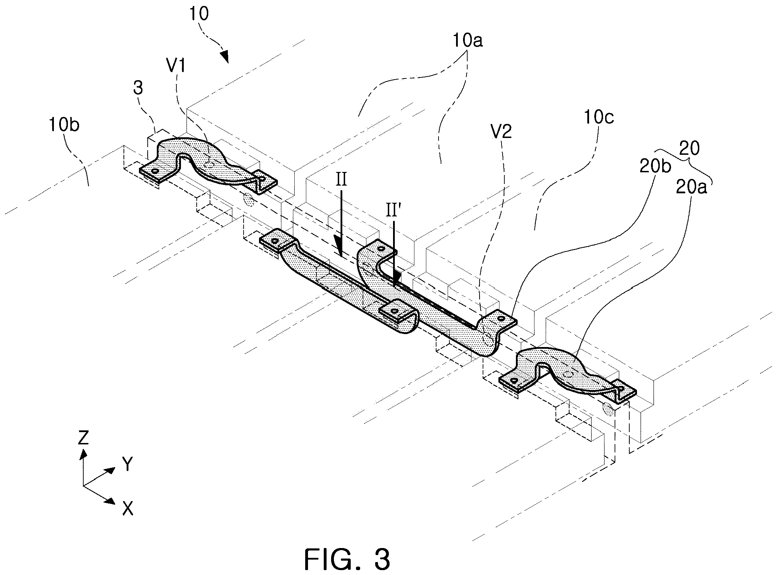

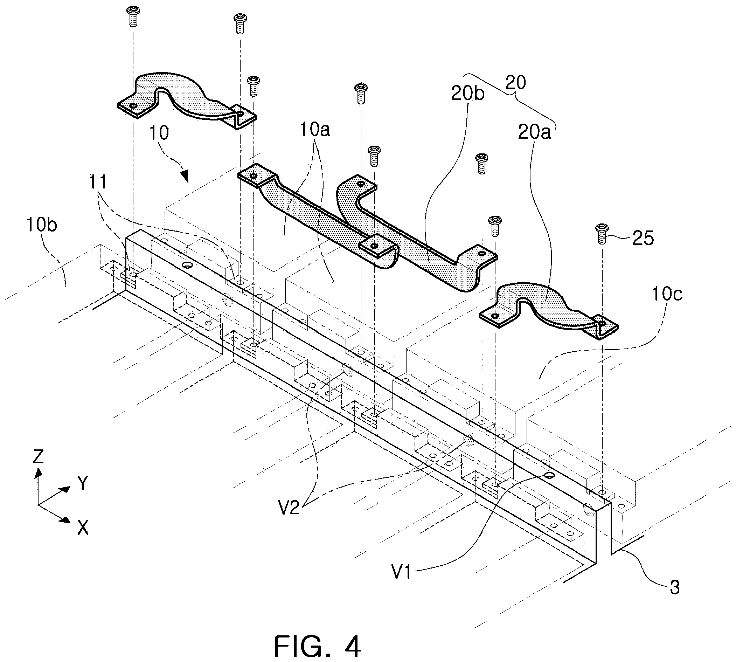

FIG. 1 is a simplified schematic perspective view illustrating a battery pack according to an example embodiment of the present disclosure. FIG. 2 is a partially exploded perspective view of FIG. 1. FIG. 3 is an enlarged perspective view of the busbar fastening structure illustrated in FIG. 1. FIG. 4 is an exploded perspective view of FIG. 3.

Referring to FIGS. 1 to 4, a battery pack 1 according to an example embodiment of the present disclosure may include a pack case 2, a plurality of battery modules 10, and a busbar 20.

The pack case 2 may provide a space for accommodating other components therein hereinafter referred to also as the accommodating space. For example, a plurality of battery modules 10 may be accommodated in the accommodating space of the pack case 2. The plurality of battery modules 10 may be disposed in parallel and may form multiple rows in the accommodating space of the pack case 2.

In the drawings, only a portion covering side surfaces and lower portions of the battery modules 10 is illustrated as the pack case 2 for ease of description. However, the pack case 2 may be provided as a portion of the entire battery modules 10.

The pack case 2 may be formed, for example, of a metal material for enhanced rigidity, but the present disclosure is not limited to a metal material only.

In addition, the pack case 2 according to the present example may include a reinforcing frame 3 which is disposed between rows formed in the battery module 10.

The reinforcing frame 3 may reinforce the rigidity of the pack case 2. The reinforcing frame 3 may be disposed to partition the space in which the battery modules 10 are disposed, and may be disposed to cross between the two battery modules 10 spaced apart from each other by a predetermined distance.

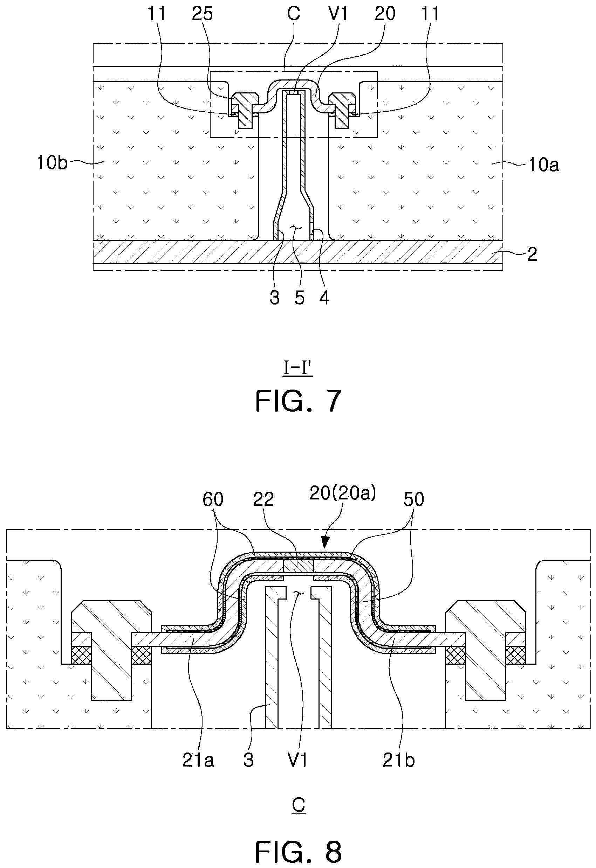

FIG. 7 is a cross-sectional view taken along line I-I' of FIG. 1. Referring to FIG. 7, the reinforcing frame 3 may be disposed between the battery modules 10 in the form of a partition wall, and opposite ends of the reinforcing frame 3 may be coupled to the pack case 2 or another reinforcing frame.

The inside of the reinforcing frame 3 is formed as an empty space, and an inner space of the reinforcing frame 3 is used as a gas flow path 5.

The gas flow path 5 is a passage through which gas moves to the outside of the battery pack 1, when the gas is discharged from the battery module 10 due to thermal runaway of the battery module 10. Accordingly, at least one gas inlet 4 through which the gas flows into the gas flow path 5 is provided in the reinforcing frame 3, and the gas flow path 5 is connected to a connection outside of the pack case 2.

In the present example, the gas inlet 4 has the form of a through-hole connecting the gas flow path 5 and an outer space of the reinforcing frame 3 to each other, preferably at a position opposing the at least one battery module 10. However, the present disclosure is not limited to such configuration only.

In addition, in the reinforcing frame 3 according to the present example, first vent portion V1 may be provided in opposite to the busbar 20.

FIG. 8 is an enlarged view of portion C of FIG. 7. Referring to FIG. 8 together, at least a portion of the first vent portion V1 is disposed to oppose the busbar 20. For example, a position of the first vent portion V1 is not limited to a specific position, and may be defined to correspond to a shape of the busbar 20 or to a fastening position of the busbar 20.

In the present example, the first vent portion V1 is disposed over or on an upper surface of the reinforcing frame 3 and may be an open hole. However, the first vent portion V1 is not limited to the open hole form, and may, for example, be configured in a form of a valve or a membrane that open at or above a specific pressure or temperature.

This configuration is advantageous because when gas flows into the gas flow path 5 of the reinforcing frame 3 due to a malfunction or an abnormal phenomenon in the battery cell, the gas may be discharged outside of the reinforcing frame 3 through the first vent portion V1. Thus, the gas is discharged toward the busbar 20.

The battery module 10 may include a battery cell including a lithium secondary battery or a nickel-hydrogen secondary battery. Each battery module 10 may be formed to have a hexahedral form, and at least one terminal 11 may be disposed on one side thereof. The terminal 11, a conductive member exposed to the outside of the battery module 10 for electrical connection to the outside, may be electrically connected to at least one corresponding internal element of the battery module 10.

In the present example, the terminal 11 is disposed such that the battery module 10 is parallel to a bottom surface of the pack case 2. In addition, an upper surface of the terminal 11 is open to outside of the battery module 10.

The terminal 11 includes positive and negative terminals. Both the positive and the negative terminals are disposed on one side of the battery module 10, or alternatively, are disposed on opposite sides of the battery module 10.

In the present example, the terminal 11 is provided in a flat plate conductive form. However, the present disclosure is not limited thereto. The terminal 11 may be modified to have various forms of being easily coupled to the busbar 20.

The busbar 20 may be fastened to the terminal 11. For example, a coupling hole into which a busbar fastening member (25 in FIG. 4) is inserted is provided in the terminal 11.

As a busbar fastening member 25, a member such as a bolt or a screw may be used, and the busbar fastening member 25 may sequentially pass through the busbar 20 and the terminal 11, and may fasten the busbar 20 to the terminal 11. Accordingly, the busbar 20 contact with the terminal 11 by the busbar fastening member 25 to be electrically and physically connected to the terminal 11.

In addition, at least one of the battery modules 10 according to the present example embodiment may include a second vent portion V2.

The second vent portion V2 may be provided in a module case of the battery module 10 and may be open when internal pressure of the battery module 10 increases to a specific pressure or higher. Accordingly, the second vent portion V2 may be used as an outlet through which gas generated in the battery module 10 is discharged.

The second vent portion V2 may be configured as a valve that is open at a specific pressure or a specific temperature or higher. However, the present disclosure is not limited thereto, and the second vent portion V2 may be configured in the form of a film that is cut or destroyed at a specific pressure or a specific temperature or higher.

At least a portion of the second vent portion V2 is disposed to oppose the busbar 20 to be described below. Accordingly, a position of the second vent portion V2 is not limited to a specific position, and may be defined to correspond to the shape of busbar 20 or to the fastening position of the busbar 20.

In the present example, the second vent portion V2 may be formed to discharge gas in a longitudinal direction (Y-axis direction) of the battery module 10. However, the present disclosure is not limited thereto, and may be formed at various positions opposing the busbar 20, such as a position discharging the gas in an upper direction (Z-axis direction) of the battery module.

In the battery module 10 configured as described above, when gas is generated in the battery module 10 due to an abnormal phenomenon or malfunction in the battery cell, the gas may be discharged to outside of the battery module 10 through the second vent portion V2, and thus the gas may be discharged toward the busbar 20.

During thermal runaway of the battery cell, not only gas but also explosion by-products including flame or particles may be discharged through the second vent portion V2. Accordingly, in the present disclosure, the above-described gas may include all of the explosion by-products outside of the battery module 10 during thermal runaway.

The battery pack 1 according to the present example includes at least one busbar 20.

The at least one busbar 20 may include a plurality of bus bars connecting to each other, a terminal 11 of a battery module 10a (hereinafter, referred to as a first battery module), and a terminal 11 of another neighboring battery module 10b (hereinafter, referred to as a second battery module). For example, the at least one busbar 20 may be fastened to the terminal 11 of the first battery module 10a and the terminal 11 of the neighboring second battery module 10b to physically/electrically interconnect the terminals 11.

The busbar 20 according to the present example embodiment may be formed by processing a flat rod-shaped conductive member. When the busbar 20 is coupled to the terminal 11, a lower surface of the busbar 20 may be disposed to be in surface contact with the terminal 11 and an upper surface of the busbar 20 may be disposed to oppose the outside of the battery module 10.

The battery modules 10 according to the present example embodiment may be connected in series or in parallel through the busbar 20. For example, various combinations may be made, such as a portion of the battery modules 10 connected in series and a portion of the battery modules 10 connected in parallel, by the busbar 20.

The busbar 20 may be formed of a flexible conductive material. However, the present disclosure is not limited thereto.

The busbar 20 according to the present example embodiment may refer to a high-voltage busbar electrically connecting the battery modules 10 to each other. In addition, in the present example embodiment, the busbar 20 may include a first busbar 20a and a second busbar 20b.

The first busbar 20a may connect the first battery module 10a and the second battery module 10b disposed such that side surfaces on which the terminals 11 are disposed oppose each other. As described above, the reinforcing frame 3 may be disposed between the first battery module 10a and the second battery module 10b, and thus the first busbar 20a may be disposed in the form of crossing the reinforcing frame 3 through an upper portion of the reinforcing frame 3. Accordingly, at least a portion of the first busbar 20a may be disposed to oppose the upper surface of the reinforcing frame 3, and at least a portion may be disposed to oppose the first vent portion V1 described above.

The second busbar 20b may interconnect two battery modules 10a and 10c disposed in parallel. In this case, as described above, at least a portion of the second busbar 20b may be disposed to oppose the second vent portion V2.

In the present example embodiment, the second vent portion V2 may be formed to discharge gas in a longitudinal direction (Y-axis direction) of the battery module 10, and thus at least a portion of the second busbar 20b may be disposed to oppose a corresponding surface of the battery module 10. Accordingly, at least a portion of the second busbar 20b may be disposed between the reinforcing frame 3 and the battery module 10.

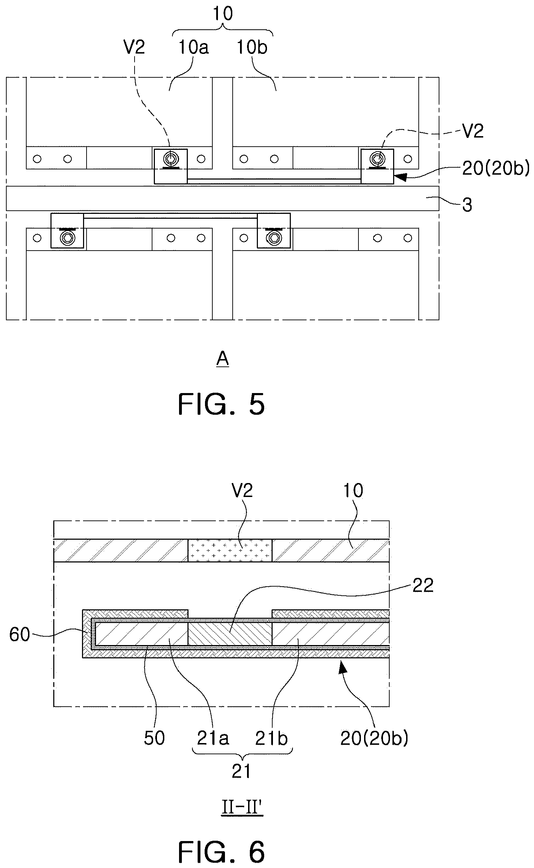

FIG. 5 is an enlarged plan view of portion A of FIG. 2. FIG. 6 is a cross-sectional view taken along line II-II' of FIG. 3.

Referring to FIGS. 5 and 6 together, the busbar 20 according to the present example embodiment may include a body portion 21 and a breakable portion 22.

The body portion 21, a portion fastened to the battery module 10, may constitute opposite ends of the busbar 20. Specifically, the body portion 21 may include a first body portion 21a fastened to the first battery module 10a and a second body portion 21b fastened to the second battery module 10b. The first body portion 21a and the second body portion 21b may be disposed to be spaced apart from each other, and at least one breakable portion 22 may be disposed between the first body portion 21a and the second body portion 21b.

At least one of the breakable portions 22 is inserted into the middle of the busbar 20, and the body portion 21 may be divided into at least two body portions 21a and 21b on opposite sides of the breakable portion 22. Accordingly, the breakable portion 22 may interconnect the first body part 21a and the second body part 21b.

The breakable portion 22 may be easily melted by hot gas. Accordingly, the breakable portion 22 may be formed of a material fused at a temperature lower than those of the first body portion 21a and the second body portion 21b. To this end, the breakable portion 22 may be formed of a material different from those of other portions of the busbar 20.

In the busbar 20 according to the present example embodiment, the body portion 21 may be formed of a copper material, and the breakable portion 22 may be formed of an aluminum material. However, the present disclosure is not limited thereto.

The breakable portion 22 and the body portion 21 may be integrally formed by a process such as friction stir welding, but the present disclosure is not limited thereto, and various modifications may be made, such as coupling by pressing or using a fastening member.

The breakable portion 22 may have a structure vulnerable to pressure or impact in addition to heat. For example, the breakable portion 22 may have a cross-sectional area smaller than that of the body portion 21. At least a portion of the breakable portion 22 may be formed to have a width narrower than that of the body portion 21 or a thickness less than that of the body portion 21. In this case, when overcurrent flows through the busbar 20, the breakable portion 22 may have greatly increased resistance, as compared to the body portion 21, such that the breakable portion 22 may be fused more quickly than the body portion 21 due to generated heat. Accordingly, the breakable portion 22 may also perform a function of cutting off the flow of overcurrent.

In some cases, the second busbar 20b may be disposed to oppose the second vent portion V2, and accordingly, two breakable portions 22 may be provided. In this case, a portion of the second busbar 20b disposed between the two breakable portions 22 may be understood as the body portion 21, and thus may be formed of the same material as that of the body portion 21.

As illustrated in FIGS. 6 and 8, the breakable portion 22 may be disposed to oppose the above-described vent portions V1 and V2. Specifically, the first busbar 20a may be disposed such that at least a portion of the breakable portion 22 opposes the first vent portion V1 provided in the reinforcing frame 3, and the second busbar 20b may be disposed such that at least a portion of the breakable portion 22 opposes the second vent portion V2 provided in the battery module 10.

Accordingly, the breakable portion 22 may be easily broken by high-temperature and high-pressure gas discharged from the vent portions V1 and V2, and thus the electrical connection between the battery modules 10 may be cut off.

Accordingly, even when a problem occurs in a specific battery module 10, the battery module 10 may be prevented from being unnecessarily electrically connected to other members (for example, a pack case, and the like), thereby suppressing the spread of the above-described problem to a secondary explosion or thermal runaway.

In addition, the busbar 20 according to the present example embodiment may include an insulating cover 50 and a flameproof cover 60.

The insulating cover 50 may be provided to prevent the busbar 20 from being in unnecessary electrical contact with other components (for example, a pack case, and the like).

The insulating cover 50 may be formed to entirely cover a surface of the busbar 20 except for a portion of the busbar 20 coupled to a terminal. The insulating cover 50 may be formed of an insulation material. In the present example embodiment, the insulating cover 50 may be provided in the form of insulating coating coated with an insulating resin, but the present disclosure is not limited thereto. The insulating cover 50 may be formed by winding an insulating tape around the busbar 20, and the insulating cover 50 may be formed in the form of a housing accommodating the busbar 20 therein.

In order to allow the breakable portion 22 to be quickly fused, the insulating cover 50 may also need to be easily removed by high-temperature gas discharged from the vent portions V1 and V2. Accordingly, the insulating cover 50 according to the present example embodiment may be formed of a material that is meltable and removable at a temperature of 200°C or lower.

When flames spread from the battery module 10, a flameproof cover 60 may be provided to block the propagation of the flames and to protect the busbar 20 from the flames. Accordingly, the flameproof cover 60 may be formed of a material that does not burn easily.

For example, the flameproof cover 60 may be formed of a flame-retardant material, a non-combustible material, or a refractory thermal insulation material. For example, the flameproof cover 60 may be formed of a material melting at a temperature of 1000°C or higher.

In the present example embodiment, as the flameproof cover 60, a sheet in which mica is stacked on at least one surface thereof may be used. However, the present disclosure is not limited thereto. Various materials such as stainless steel, graphite, graphene, carbon fiber reinforced plastics (CFRP), glass fiber reinforced plastics (GFRP), non-woven compressible fiber, and the like may be used as long as it is possible to effectively block the flames.

In addition, the flameproof cover 60 may have flameproof performance or flame-retardant performance using a chemical to a combustible material such as fiber.

In the present example embodiment, the flameproof cover 60 may be formed by being stacked on a surface of the insulating cover 50. For example, the flameproof cover 60 may be formed to cover the entire insulating cover 50. In this case, the flameproof cover 60 may not be disposed on portions opposing the vent portions V1 and V2 among portions of the busbar 20 in which the breakable portion 22 is formed. Accordingly, at least a portion of the insulating cover 50 covering the breakable portion 22 may be exposed to the outside of the flameproof cover 60 to be disposed to oppose the vent portions V1 and V2.

Due to such a configuration, high-temperature gas discharged from the vent portions V1 and V2 may be in direct contact with the insulating cover 50 to melt the insulating cover 50 and then fuse the breakable portion 22.

In the present example embodiment, the flameproof cover 60 may be formed by applying a material having flameproof performance to a surface of an insulating cover, or by winding a sheet or tape having flameproof performance around the insulating cover. In addition, the flameproof cover 60 may be formed in the form of a housing accommodating the busbar 20 therein.

In the battery pack 1 according to the present example embodiment configured as described above, when an event such as thermal runaway occurs in a specific battery module, gas discharged from the vent portions V1 and V2 may quickly cut the busbar 20. Accordingly, electrical connection with other battery modules may be quickly cut off, thereby ensuring stability and reliability of the battery pack 1 during thermal runaway.

The present disclosure is not limited to the above-described example embodiments, and various modifications may be made.

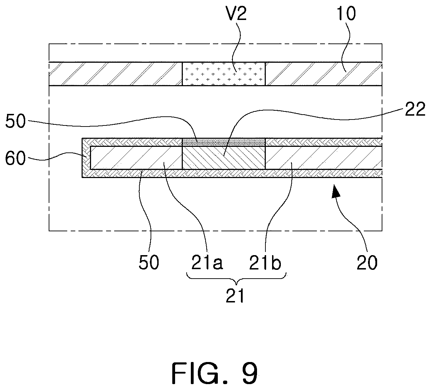

FIG. 9 is a simplified schematic view illustrating a cross-section of a busbar according to another example embodiment of the present disclosure, and illustrates a cross-section corresponding to that of FIG. 6.

Referring to FIG. 9, accordingly, the flameproof cover 60 according to the present example embodiment may be disposed directly on a surface of the busbar 20. In this case, the flameproof cover 60 may provide the above-described insulating cover function together.

In the present example embodiment, the flameproof cover 60 may be formed by applying a material having flameproof performance to a surface of the busbar 20, or by winding a sheet or tape having flameproof performance around the busbar 20. In addition, the flameproof cover 60 may be formed in the form of a housing accommodating the busbar 20 therein.

In addition, in the same manner as the above-described example embodiment, in the present example embodiment, the flameproof cover 60 may not be disposed on a portion of the breakable portion 22 of the busbar 20 opposing the vent portion V2.

The insulating cover 50 may be disposed on a portion of the breakable portion 22 on which the flameproof cover 60 is not disposed. In the present example embodiment, the insulating cover 50 may be disposed only on a portion in which the breakable portion 22 is exposed to the outside of the flameproof cover 60, thereby ensuring insulation of the breakable portion 22.

The insulating cover 50 may be formed of the same material as that in the above-described example embodiment. For example, the insulating cover 50 may be formed of a material that is meltable and removable at a temperature of 200°C or lower.

In the present example embodiment, the insulating cover 50 may be omitted, as necessary. For example, when a portion of the insulating cover 50 opposing the breakable portion 22 has excellent electrical insulating properties, the insulating cover 50 may be omitted and the breakable portion 22 may be exposed to the atmosphere.

In addition, although the present example embodiment has been described with reference to a first busbar, the above-described configuration may be equally applied to a second busbar.

While example embodiments have been shown and described above, it will be apparent to those skilled in the art that modifications and variations could be made without departing from the scope of the present disclosure as defined by the appended claims.

For example, the above-described example embodiments may be implemented by deleting some components, as necessary. In addition, in the above-described example embodiments, a case in which one busbar includes one breakable portion is described as an example, but it is also possible to configure the one busbar to include multiple breakable portions. Similarly, multiple vent portions may be provided to correspond to one busbar.

## Claims

1. A battery pack comprising:
a pack case accommodating a first battery module and a second battery module; and
a busbar including a first body portion fastened to the first battery module, a second body portion fastened to the second battery module, and at least one breakable portion disposed between the first body portion and the second body portion and fused at a temperature lower than those of the first body portion and the second body portion,
wherein the busbar includes an insulating cover covering the first and second body portions and the breakable portion, and a flameproof cover covering the insulating cover, and
wherein at least a portion of the insulating cover covering the breakable portion is exposed to the outside of the flameproof cover.

2. The battery pack of claim 1, wherein the flameproof cover is formed of a sheet including mica.

3. The battery pack of claim 1 or 2, wherein the insulating cover is formed of a material melting at a temperature of 200°C or lower.

4. The battery pack of anyone of claims 1 to 3, wherein the flameproof cover is formed of a material melting at a temperature of 1000°C or higher.

5. The battery pack of anyone of the preceding claims, wherein a portion of the insulating cover exposed to the outside of the flameproof cover is disposed to oppose one of the first battery module and the second battery module.

6. The battery pack of anyone of the preceding claim, wherein
at least one of the first battery module and the second battery module includes a vent portion discharging gas generated therein to the outside, and
the busbar is disposed such that at least a portion of the breakable portion opposes the vent portion.

7. The battery pack of anyone of the preceding claims, wherein
the first body portion and the second body portion are formed of a copper material, and
the breakable portion is formed of an aluminum material.

8. The battery pack of anyone of the preceding claims, wherein
the pack case includes a reinforcing frame disposed between the first battery module and the second battery module, and
an inner space of the reinforcing frame is used as a gas flow path through which gas moves.

9. The battery pack of claim 8, wherein
the reinforcing frame includes a vent portion through which the gas moving through the gas flow path is discharged to the outside of the reinforcing frame, and
the busbar is disposed such that at least a portion of the breakable portion opposes the vent portion.

10. The battery pack of claim 9, wherein
the vent portion is disposed on an upper surface of the reinforcing frame, and
the busbar is disposed to cross an upper portion of the reinforcing frame.
